# EUROPEAN PATENT APPLICATION

(11) **EP 4 221 162 A1**
(43) Date of publication of application: **02.08.2023**
(21) Application number: 21871011.9
(22) Date of filing: 27.07.2021
(51) Int. Cl.: H04M 1/02, G06F 1/16

(54) **ELECTRONIC DEVICE**

(30) Priority: 27.09.2020 CN 202011030626
(71) Applicant: GUANGDONG OPPO MOBILE TELECOMMUNICATIONS CORP., LTD., Dongguan, Guangdong 523860 (CN)
(72) Inventor: CHEN, Yongliang, Dongguan, Guangdong 523860 (CN); YIN, Bin, Dongguan, Guangdong 523860 (CN)
(74) Representative: Ipside
(86) International application number: PCT/CN2021/108686
(87) International publication number: WO 2022/062633

(57) **Abstract**

An electronic apparatus 100 includes: a fixed screen (21) is fixedly arranged on the front of a first shell (11). The sliding screen (22) couples to one side of the fixed screen (21). In response to a second shell (12) being pulled out relative to a first shell (11), the sliding screen (22) being moved from the back of the housing (1) to the front of the housing (1). A first magnetic member (31) is disposed on the second shell (12). A second magnetic member (32) is disposed on the sliding screen (22), so that the sliding screen (22) is attracted on the second shell (12). (FIG. 1)

## Description

### TECHNICAL FIELD

The present disclosure relates to a field of electronic technology, in particular to an electronic apparatus.

### BACKGROUND

Mobile phone with sliding screen is a new form of mobile phone that appears in the market now. The sliding screen covers the front of the terminal and rolled up to the back of the terminal, a regular form of the terminal is a phone form, and the terminal can be in a tablet form after expansion in the left, right or up and down direction.

### SUMMARY

An embodiment of the present disclosure aims to solve at least one of the technical problems that existed in the related art. To solve the problem, the present disclosure provides an electronic apparatus, the screen of the electronic apparatus is not easily arch during movement.

In some embodiments of the present disclosure, an electronic apparatus includes a housing, a screen and a magnetic assembly. The housing includes a first shell and a second shell. The second shell is pullably coupled to the first shell. The screen includes a fixed screen and a sliding screen. The fixed screen is fixedly arranged on the front of the first shell. The sliding screen couples to one side of the sliding screen. In response to the second shell being pulled out relative to the first shell, the sliding screen being moved from the back of the housing to the front of the housing. In response to the second shell being retracted relative to the first shell, the sliding screen being moved from the front of the housing to the back of the housing. The magnetic assembly includes one or more first magnetic members and one or more second magnetic members. The first magnetic member is disposed on the second shell. The second magnetic member is disposed on the sliding screen, so that the sliding screen is attracted on the second shell.

Additional aspects and advantages of the present disclosure will be given in part in the following description, in part as will become apparent from the following description, or as will be learned through the practice of the present disclosure.

### BRIEF DESCRIPTION OF DRAWINGS

The above and/or additional aspects and advantages of the present application will become obvious and easy to understand from the description of the embodiments in conjunction with the following drawings.
FIG. 1 is an exploded structural schematic view of an electronic apparatus according to an embodiment of the present disclosure.
FIG. 2 is a comparative view of the electronic apparatus of the embodiment of the present disclosure illustrated in Figure 1 with a second shell thereof in the expanded state and retracted state.
FIG. 3 is a cross-sectional structural schematic view of the electronic apparatus according to the embodiment of the present disclosure illustrated in Figure 1 with a second shell thereof in a retracted state.
FIG. 4 is a cross-sectional structural schematic view of the electronic apparatus according to the embodiment of the present disclosure illustrated in Figure 1 with a second shell thereof in an expanded state.

List of reference numbers and corresponding components in drawings is show below:
electronic apparatus 100; housing 1; first shell 11; second shell 12; rotating shaft 121; screen 2; fixed screen 21; sliding screen 22; transition portion 23; magnetic assembly 3; first magnetic member 31; magnet 311; second magnetic member 32; magnetic sheet 321; guide mechanism 4; guide strip 41; connecting strip 411; guide slot 42; cover 5; crosswise portion 51; longitudinal portion 52; support sheet 6.

### DETAILED DESCRIPTION

Embodiments of the present disclosure will be further described in conjunction with drawings below. Same or similar labeling in the drawings always indicate element with same or similar structure or elements with same or similar function. In addition, the embodiments of the present disclosure in conjunction with drawings are exemplary, which is configured to explain but not limiting the present disclosure.

Different embodiments or examples are provided below to achieve different structure in the present disclosure. In order to simplify the present disclosure, components and setting of specific examples will be described below. Of course, the components and settings of specific examples are examples, but not configured to limit the present disclosure. In addition, reusing reference numbers and/or letters in different examples is for the purpose of simplification and clarity, and does not indicate the relationship between the various embodiments and/or settings discussed. In addition, the embodiments of the present disclosure provide examples of various specific processes and materials, but one of ordinary skill in the art may be aware of the applicability of other processes and/or the use of other materials.

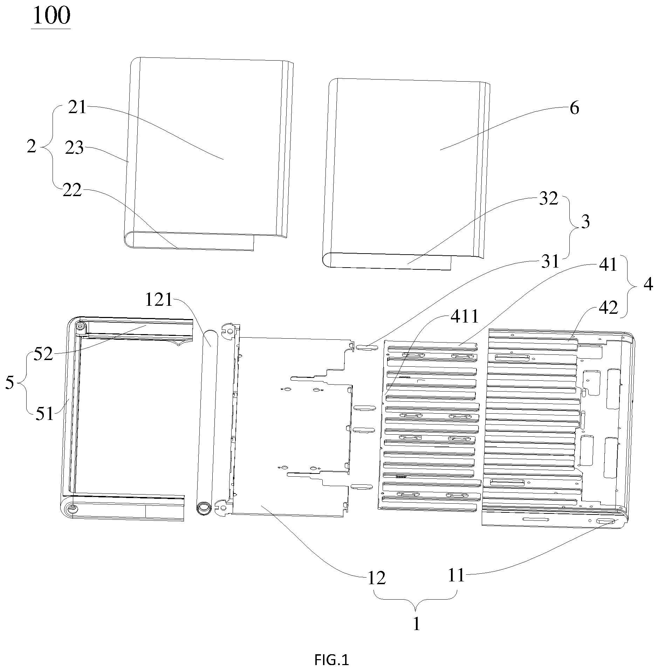

As illustrated in FIG. 1, in some embodiments of the present disclosure, an electronic apparatus 100 includes a housing 1, a screen 2 and a magnetic assembly 3. The housing 1 includes a first shell 11 and a second shell 12. The second shell 12 is pullably coupled to the first shell 11. The screen 2 includes a fixed screen 21 and a sliding screen 22. The fixed screen 21 is fixedly arranged on a front face of the first shell 11. The sliding screen 22 is coupled to one side of the fixed screen 21. In response to the second shell 12 being pulled out relative to the first shell 11, the sliding screen 22 moves from the back of the housing 1 to the front of the housing 1. In response to the second shell 12 being retracted relative to the first shell 11, the sliding screen 22 moves from the front of the housing 1 to the back of the housing 1. The magnetic assembly 3 includes one or more first magnetic members 31 and one or more second magnetic members 32. The first magnetic member 31 is disposed on the second shell 12. The second magnetic member 32 is disposed on the sliding screen 22, so that the sliding screen 22 is attracted on the second shell 12.

In the embodiments of the present disclosure, the second shell 12 can include a rotating shaft 121, and the sliding screen 22 may be rotated around the rotating shaft 121.

In the embodiments of the present disclosure, the electronic apparatus 100 can further include a drive mechanism. The drive mechanism may include a drive gear and a drive rack, the drive rack can be engaged with the drive gear. The drive rack can be disposed on the second shell 12. The drive rack can be disposed on the sliding screen 22, and the drive gear can be capable of rotating to drive the sliding screen 22 to slide.

In the embodiments of the present disclosure, the sliding screen 22 can be seamlessly connected to the fixed screen 21 to form the screen 2.

In the embodiments of the present disclosure, the first magnetic member 31 and/or a second magnetic member 32 can be made of a metal or a magnetic non-metallic material.

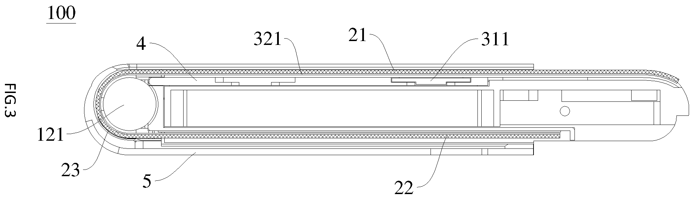

As illustrated in FIG. 3, in some embodiments of the present disclosure, at least one of the first magnetic member 31 and the second magnetic member 32 may include one or more magnets 311.

In the embodiments of the present disclosure, the number of magnets 311 can be two or more, and the magnets 311 can be spaced apart from each other.

In the embodiments of the present disclosure, the magnetic assembly 3 may include at least one of a magnetic sheet 321 and a magnetic wire.

In the embodiments of the present disclosure, if at least one of the first magnetic members 31 and the second magnetic members 32 includes a number of the magnetic sheets 321, each of the magnetic sheets 321 is in the form of a strip. Or if at least one of the first magnetic members 31 and the second magnetic members 32 includes a number of the magnetic wires, the number of the magnetic wires are connected to form a mesh.

In the embodiments of the present disclosure, the number of the first magnetic members 31 can be two or more, and the first magnetic members 31 can be evenly disposed on the second shell 12.

In the embodiments of the present disclosure, the first magnetic members 31 and the second magnetic members 32 can be spaced apart from each other.

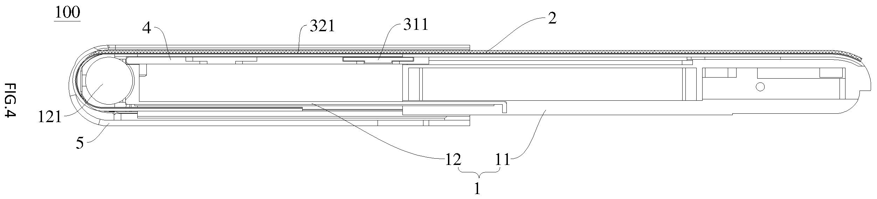

As illustrated in FIG. 1 to FIG. 4, in the embodiments of the present disclosure, the magnetic sheet 321 can be disposed on the back of the sliding screen 22, and a support sheet 6 can be disposed on the back of the fixed screen 21 connected to the magnetic sheet 321.

In the embodiments of the present disclosure, the support sheet 6 can be integrally formed with the magnetic sheet 321.

In the embodiments of the present disclosure, the electronic apparatus 100 may further include a guide mechanism 4 disposed between the first shell 11 and the second shell 12. The guide mechanism 4 can be configured to confine the pulling or retracting direction of the second shell 12 to relative to the first shell 11.

In the embodiments of the present disclosure, the guide mechanism 4 may include one or more guide slots 42 and one or more guide strips 41. The guide slots 42 can be disposed on the first shell 11 and the guide strip 42 can be disposed on the second shell 12. The guide strips 41 can fit in the guide slots 42. The guide slots 42 are configured to confine the guide strips 41 to slide along the direction of movement of the second shell 12.

In the embodiments of the present disclosure, the shape of the guide strips 41 can be elongated strips set along the direction of movement of the second shell 12. The guide slots 42 can be elongated slots.

In the embodiments of the present disclosure, the guide strips 41 can be a number of parallel strips, and the guide strips 41 can be connected together by a connecting strip 411. The guide slots 42 can be a number of slots and in correspondence with the guide strips 41.

In the embodiments of the present disclosure, the first magnetic members 31 can be disposed on the guide strips 41.

As illustrated in FIG. 1 to FIG. 2, in the embodiments of the present disclosure, the electronic apparatus 100 may further include a cover 5 disposed on the second shell 12. The cover 5 may include a crosswise portion 51 and two longitudinal portions 52. The crosswise portion 51 can be disposed on a side of the second shell 12 corresponding to the pull-out direction. The sliding screen 22 can slide between the front and the back of the housing 1 through the crosswise portion 51. The two longitudinal portions 52 can be connected to opposite ends of the crosswise portion 51 correspondingly. The sliding screen 22 can be confined on opposite sides of the two longitudinal portions 52.

In the embodiments of the present disclosure, the fixed screen 21 and the sliding screen 22 can be integrated.

The electronic apparatus 100 according to the embodiments of the present disclosure is described below with reference to the figures attached.

It is noted that the electronic apparatus 100 can be a communication device, a gaming device, a music playing device, a storage device, an AR (Augmented Reality) device, or a device applied to a vehicle, etc. Furthermore, an "electronic apparatus 100" used herein includes, but not limited to, a device connected through a wired line connection, for example, through Public Switched Telephone Network (PSTN), Digital Subscriber Line (DSL), digital cable or direct cable; and/or a device connected with another data link/network; and/or a device connected through a wireless interface, for example, a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter; and/or a device configured by another electronic apparatus 100 to receive/send a communication signal. An electronic apparatus 100 configured to communicate by a wireless interface may be called a "wireless communication terminal", a "wireless terminal" or a "mobile terminal". Examples of a mobile terminal include, but not limited to, a satellite or cellular telephone, a Personal Communication System (PCS) terminal capable of combining capabilities of a cellular radio telephone and data processing, faxing and data communication, a Personal Digital Assistant (PDA) capable of including a radio telephone, a pager, Internet/Intranet access, a Web browser, a notepad, a calendar and/or a Global Positioning System (GPS) receiver, and a conventional laptop and/or palmtop receiver or another electronic apparatus 100 including a radio telephone transceiver.

As illustrated in FIG. 1, in some embodiments of the present disclosure, an electronic apparatus 100 includes a housing 1, a screen 2 and a magnetic assembly 3.

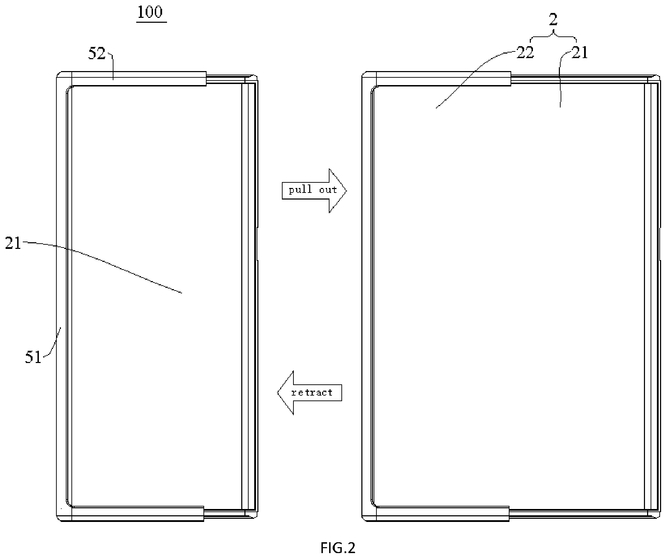

The housing 1 includes a first shell 11 and a second shell 12. The second shell 12 is pullably coupled to the first shell 11. When the second shell 12 is pulled out and retracted relative to the first shell 11, the electronic apparatus 100 changes as illustrated in Figure 2. As illustrated in FIG. 1, the screen 2 includes a fixed screen 21 and a sliding screen 22. The fixed screen 21 is fixedly arranged on the front of the first shell 11. The sliding screen 22 couples to one side of the sliding screen 22. As illustrated in FIG. 3 to FIG. 4, as the second shell 12 is pulled out relative to the first shell 11, the sliding screen 22 moves from a back of the housing 1 to a front of the housing 1. As the second shell 12 is retracted relative to the first shell 11, the sliding screen 22 moves from the front of the housing 1 to the back of the housing 1.

In other words, when the second shell 12 is pulled out and retracted relative to the first shell 11, the form size of the housing 1 changes. When the second shell 12 is retracted to the limit, the sliding screen 22 is disposed on the back side of the housing 1, and the size of the housing 1 reaches to the minimum, thereby reducing the size and volume of the electronic apparatus 100 and improving the convenience of carrying by the user. When the second shell 12 is pulled out to the limit, the sliding screen 22 is disposed on the front side of the housing 1, and the size of the housing 1 reaches to the maximum, when both the fixed screen 21 and the sliding screen 22 are on the front side of the housing 1, which is conducive to using the fixed screen 21 and the sliding screen 22 to display a whole picture.

Here assume that the fixed screen 21 has a length direction, width direction perpendicular to each other, and the second shell 12 can be moved along the above-mentioned length direction relative to the first shell 11. And the second shell 12 can also be moved along the above-mentioned width direction relative to the first shell 11, here the pulling direction of the second shell 12 relative to the first shell 11 is not limited. Furthermore, when the second shell 12 is retracted, the second shell 12 may be retracted as at least partly inside the first shell 11 (i.e., a holding chamber is formed inside the first shell 11 and at least part of the second shell 12 may extend or retract into the holding chamber), and at this time at least part of the sliding screen 22 is disposed on the back of the first shell 11. The second shell 12 may be retracted as at least partly on the back of the first shell 11, and at this time at least part of the sliding screen 22 is disposed on the back of the second shell 12.

The embodiments of the present disclosure involve a fixed screen 21 and a sliding screen 22, which get their names simply from the fact that the fixed screen 21 is fixed relative to the first shell 11 and the sliding screen 22 is movable relative to the first shell 11. And one side of the second shell 12 can include an expanding structure (such as the spindle 121 or crosswise portion 51 mentioned below), and the sliding screen 22 is coupled to the side of the fixed screen 21 adjacent to the expanding structure.

Take the second shell 12 in Figure 2 as an example, the second shell 12 can be moved to the left relative to the first shell 11. The expanding structure in this embodiment can be positioned on the left side of the second shell 12, and the sliding screen 22 can be connected to the left side of the fixed screen 21. When the second shell 12 is retracted inside the first shell 11 or retracted to the back of the first shell 11, the sliding screen 22 can be located on the back of the housing 1. When the second shell 12 is pulled to the left relative to the first shell 11, the expanding structure can assist the sliding screen 22 to gradually expand on the left side of the fixed screen 21. In this embodiment of the present disclosure, when the second shell 12 is pulled or retracted relative to the first shell 11, the sliding screen 22 can slides with, and the sliding screen 22 can be switched between folding to the back of the housing 1 and unfolding to the front of the housing 1. Regarding how the sliding screen 22 slides when the second shell 12 is pulled or retracted relative to the first shell 11, it can be realized by using the relevant technology disclosed in the related art or other technical means that can achieve the same effect, and will not be limited here. For example, the electronic apparatus 100 can also include a drive mechanism. The drive mechanism may include a drive gear and a drive rack, the drive rack can be engaged with the drive gear. The drive gear can be disposed on the second shell 12. The drive rack can be disposed on the sliding screen 22. When the second shell 12 is pulled or retracted, the drive gear can rotate, thus driving the sliding screen 22 to slide. The drive gear can be rotated driven by an electric motor, or by forming a mechanical coupling structure with the second shell 12. For example, the mechanical coupling structure includes traction rope and return mechanism. The return mechanism and one end of the traction rope are fixed in the first shell 11, the traction rope can be wound in the drive gear and the other end can be connected to the return mechanism. When the second shell 12 is pulled out, the traction rope can be pulled out from the return mechanism, the traction rope drives the drive gear to rotate. When the second shell 12 is pushed back, the traction rope can be pulled back by the return mechanism, the traction rope drives the drive gear to reverse rotation.

In the embodiments of the present disclosure, as illustrated in FIG. 1, the magnetic assembly 3 includes one or more first magnetic members 31 and one or more second magnetic members 32. The first magnetic member 31 is disposed on the second shell 12. The second magnetic member 32 is disposed on the sliding screen 22, so that the sliding screen 22 is attracted on the second shell 12. This allows the sliding screen 22 to be attracted to the housing 1 at all times when the second shell 12 is moved relative to the first shell 11.

It will be understood that since the sliding screen 22 is required to be kept in a movable state, it cannot be directly adhered or otherwise fixed to the second shell 12. In the solution of relate art, this part of the screen can be constrained by the edge structure and by the drive mechanism, but the above constraint position is very limited, and when the sliding screen 22 is unfolded from the closed state to the unfolded state, this part of the screen is easy to arch, thus affecting the display effect.

In this embodiment of the present disclosure, the attraction between the first magnetic members 31 and the second magnetic members 32 make the sliding screen 22 be attracted to the second shell 12 during both the pulling out movement and the retracting movement to achieve the visual effect of the sliding screen 22 sliding closely to the housing 1. This helps to keep the sliding screen 22 flat when sliding to the front of the housing 1 and maintain the same surface level as the fixed screen 21, thus improving the display effect. It is also conducive to the sliding screen 22 looking like the skin of the housing 1 when the sliding screen 22 is slid to the back of the housing 1, thus improving the overall texture of the product.

Since the position setting of the magnetic members is more flexible compared to other limiting structures in related art, the magnetic force can be strengthened for the places where the sliding screen 22 is prone to arching, and the flatness of the sliding screen 22 can be improved.

Moreover, the magnetic force is used to constrain the sliding screen 22, even if other non-magnetic components are placed between the first magnetic member 31 and the second magnetic member 32, it does not affect this magnetic force, so the magnetic assembly 3 can be easily set in a position that does not interfere with other moving parts.

In the embodiments of the present disclosure, as illustrated in FIG. 1, the fixed screen 21 and the sliding screen 22 are one integrated screen, that is, the screen 2 is a complete one screen, a part of the screen 2 is fixed on the first shell 11 to form the fixed screen 21, another part of the screen 2 is movable when the second shell 12 is pulled, and this part that can move to the back of the housing 1 is the sliding screen 22. The housing 1 has a thickness, and when the second shell 12 is retracted to the first shell 11, there will be a part of the screen 2 is located on the side of the housing 1, which is here called a transition portion 23 between the fixed screen 21 and the sliding screen 22.

In another embodiment, the fixed screen 21 and sliding screen 22 can be two screens, and the sliding screen 22 is seamlessly connected to the fixed screen 21, visually creating the effect of the two are one screen.

In the embodiments of the present disclosure, the fixed screen 21 can be attached to the first shell 11 by adhesive, and the fixed screen 21 can also be attached to the first shell 11 by snap-on or embedded, which is not limited here.

In the embodiments of the present disclosure, there are many forms of the structure of the first magnetic member 31 and the second magnetic member 32, for example, at least one of the first magnetic member 31 and the second magnetic member 32 can include magnet 311, that is, only the first magnetic member 31 includes magnet 311, or only the second magnetic member 32 includes magnet 311, or both the first magnetic member 31 and the second magnetic member 32 can include magnet 311. The magnet 311 is used to generate force, which is strong and reliable. Optionally, the magnet 311 can include at least one of permanent magnet and electromagnet, which is not limited here.

In this embodiment of the present disclosure, the number of the magnets 311 can be two or more, and the magnets 311 can be evenly disposed, so that the area that can be attracted after the number of magnets 311 is dispersed becomes larger, which is conducive to keeping the sliding screen 22 with good anti-arching effect during the whole process of sliding. And the size of the magnets 311 can be reduced, and a number of magnets 311 are set at intervals, and the layout position of the magnets 311 can be easy to adjust according to the actual needs of the sliding screen 22.

In the embodiments of the present disclosure, the magnetic assembly 3 may include at least one of a magnetic sheet 321 and a magnetic wire. That is, only the first magnetic member 31 includes at least one of the magnetic sheet 321 and the magnetic wire, or only the second magnetic member 32 includes at least one of the magnetic sheet 321 and the magnetic wire, or the first magnetic member 31 and the second magnetic member 32 include at least one of the magnetic sheet 321 and the magnetic wire, correspondingly.

When the magnetic sheet 321 or magnetic wire is chosen as the magnetic member, the magnetic sheet 321 or the magnetic wire can be set thinner, and the thin design can reduce the weight and help control the thickness of the electronic apparatus 100.

When the magnetic sheet 321 is chosen as the magnetic member, the characteristics of the magnetic sheet 321 itself help to improve the quality of the electronic apparatus 100, for example, when the first magnetic member 31 includes the magnetic sheet 321, i.e., the second shell 12 is provided with the magnetic sheet 321, the stiffness of the second shell 12 can be improved. When the second magnetic member 32 includes the magnetic sheet 321, i.e., the sliding screen 22 is provided with the magnetic sheet 321. The magnetic sheet 321 can play the role of supporting the sliding screen 22. In particular, some magnetic sheet 321 has stronger toughness and stiffness, and although the thinner magnetic sheet 321 is easy to curve, it is not easy to produce plastic deformation at the curve, so it can improve the wrinkle resistance of the sliding screen 22, so that the sliding screen 22 can be curved and unfolded and folded more smoothly.

In the embodiments of the present disclosure, as illustrated in FIG. 1, the magnetic sheet 321 is a whole sheet. Further, the sliding screen 22 may be fitted with a magnetic sheet 321, which may have substantially the same size and shape as the sliding screen 22. This can increase the coverage area of the magnetic sheet 321, which is conducive to expanding the magnetic attraction area.

In the embodiments of the present disclosure, there are a number of magnetic sheets 321, and the number of magnetic sheets 321 are in the form of strips, which can reduce the weight of the magnetic sheets 321 and improve the flexibility of setting the magnetic sheets 321 compared to the whole sheet.

In the embodiments of the present disclosure, the first magnetic member 31 is arranged in multiple rows and columns on the second shell 12, and the multiple rows are equally spaced from each other, and the multiple columns are equally spaced from each other, which is conducive to improving the uniformity of magnetic force distribution.

When the magnetic wire is chosen as the magnetic member, the layout position of the magnetic wire can be more flexible, and it is easier to adjust the position of the magnetic wire when it is needed according to the magnetic attraction layout. And there are some solutions in which the magnetic member can be placed inside the second shell 12 or sliding screen 22, which not only will not occupy too much space, but also the magnetic wire is not easy to be separated from the second shell 12 or sliding screen 22 when bumped. There are also some solutions in which the magnetic wire is made of a material with high stiffness and toughness, for example, the sliding screen 22 is provided with this magnetic wire, which can also improve the wrinkle resistance of the sliding screen 22.

In the embodiments of the present disclosure, the magnetic wires can be connected to form a mesh, which makes the product light and thin, and also ensures a larger magnetic coverage.

In the embodiments of the present disclosure, as illustrated in FIG. 1, the first magnetic member 31 may include the magnets 311 disposed on the second shell 12, and the second magnetic member 32 may include the magnetic sheets 321 disposed on the back of the sliding screen 22. The magnetic sheets 321 can play a role in supporting the sliding screen 22, improving the wrinkle resistance of the sliding screen 22 and enabling the sliding screen 22 to curve more smoothly. In addition, the magnetic properties of the magnets 311 cause it to attract some metals easily, and placing the magnet 311 on the second shell 12 can easily space the magnet 311 away from external items, thereby reducing the attraction of the magnet 311 to those external metals.

In the embodiments of the present disclosure, at least a part of the second shell 12 can be constructed as a first magnetic member 31. For example, at least a part of the second shell 12 can be made of a magnetic material which is capable of attracting the second magnetic member 31 and thus attracting the sliding screen 22.

In the embodiments of the present disclosure, the structure of the sliding screen 22 can construct the second magnetic member 32, for example, part of the layer of the sliding screen 22 has circuit wires, part of the circuit wires can be attracted to the magnets 311, when the second shell 12 is provided with magnets 311, the sliding screen 22 can be attracted to the second shell 12. Since the sliding screen 22 itself circuit wires generate less attraction, in some embodiments, a toughness layer may be provided on the sliding screen 22, and the toughness layer can be set near the back of the sliding screen 22 for increasing the stiffness and toughness of the sliding screen 22, and the toughness layer can be made of a magnetic mesh, which is similar to the scheme above where the magnetic wires are inside the sliding screen 22.

The solutions of the first magnetic member 31 and the second magnetic member 32 listed above can also be used in combination. For example, the first magnetic member 31 can include both magnets 311 and magnetic sheets 321, and the second magnetic member 32 can include both magnets 311 and magnetic wires, such a combination can provide sufficient magnetic force.

In the embodiments of the present disclosure, the choice of material for the first magnetic member 31 and the second magnetic member 32 is also very flexible, for example, metal pieces can be chosen directly, or non-metal pieces with magnetic properties. For example, metal pieces containing magnetic elements such as iron, cobalt, nickel, or the metal pieces are alloy pieces, etc.

In the above embodiment, the first magnetic members 31 and the second magnetic members 32 can be set apart from each other so that when the sliding screen 22 moves and takes the second magnetic members 32 with it, the first magnetic members 31 can avoid blocking and interfering with second magnetic members 32 and improve the fluidity of product form changes.

In the above embodiment, as illustrated in FIG. 1, the back of the sliding screen 22 can be provided with the magnetic sheet 321, and the back of the fixed screen 21 can be provided with a support sheet 6 connected to the magnetic sheet 321, so that the support sheet 6 can support the fixed screen 21 for protection. And the support sheet 6 can be connected to the magnetic sheet 321, so that when the magnetic sheet 321 moves to the back of the housing 1 with the sliding screen 22, the connection of the magnetic sheet 321 and the support sheet 6 is formed in a curved shape, which can also support the screen 2 well and avoid being squeezed due to protrusion.

In the embodiments of the present disclosure, the support sheet 6 can be integrally formed with the magnetic sheet 321, which can reduce the stress at the connection between the support sheet 6 and the magnetic sheet 321 and avoid breaking there during curving.

In the above embodiment, as illustrated in FIG. 1, the electronic apparatus 100 may further include a guide mechanism 4 disposed between the first shell 11 and the second shell 12. The guide mechanism 4 can be used to constrain the pulling or retracting direction of the second shell 12 relative to the first shell 11. It should be emphasized that the guide mechanism 4 being disposed between the first shell 11 and the second shell 12 does not mean that the first shell 11 and the second shell 12 need to be spaced apart with a gap to accommodate the guide mechanism 4. The guide mechanism 4 is provided between the first shell 11 and the second shell 12, so that the guide mechanism 4 can be connected to both the first shell 11 and the second shell 12, so that the movement between the first shell 11 and the second shell 12 is constrained by the guide mechanism 4 when they move with respect to each other.

The constraint from the guide mechanism 4 can not only improve the directional accuracy of the movement of the second shell 12 relative to the first shell 11, but also set the limit of movement through the guide mechanism 4. In addition, the guide mechanism 4 can also play a supporting role for the second shell 12 and improve the structural strength of the second shell 12.

In the above embodiment, as illustrated in FIG. 1, the guide mechanism 4 may include one or more guide slots 42 and one or more guide strips 41. The guide slots 42 can be disposed on the first shell 11 and the guide strip 42 can be disposed on the second shell 12. The guide strips 41 can fit in the guide slots 42. The guide slots 42 can be configured to confine the guide strips 41 to slide along the direction of movement of the second shell 12. This structure, not only simple and easy to process and assemble, but also the guide strips 41 has a greater support and strengthening effect on the second shell 12.

In the above embodiment, the shape of the guide strips 41 can be elongated strips set along the direction of movement of the second shell 12. And the guide slots 42 can be elongated slots corresponding to the guide strips 41.

In the embodiments of the present disclosure, the guide strips 41 can be a number of parallel strips, and the guide strips 41 can be connected together by a connecting strip 411. The guide slots 42 can be a number of slots and in correspondence with the guide strips 41, so as to further improve the guiding accuracy and the support effect of the second shell 12.

In the embodiments of the present disclosure, the guide strip 41 and the connecting strip 411 can be adhered together, and the guide strip 41 and the connecting strip 411 form an approximate 'comb' shape. The one-to-one correspondence of the guide strips 41 and the guide slots 42 can reduce the thickness of the electronic apparatus 100, and such an arrangement can effectively reduce the size of the electronic apparatus 100.

In the embodiments of the present disclosure, the first magnetic members 31 can be disposed on the guide strips 41. It can be understood that when designing the guide mechanism 4, it is necessary to ensure that the guide strips 41 slide smoothly along the guide slots 42, so setting the first magnetic members 31 on the guide strips 41 can easily ensure that the first magnetic members 31 do not encounter obstacles when moving. Moreover, the guide strips 41 also help to expand the coverage area of the first magnetic members 31 in the case of large area coverage.

In another embodiment of the present disclosure, the guide mechanism 4 can also be disposed on opposite sides of the housing 1. For example, in Figure 2, the second shell 12 can be moved to the left relative to the first shell 11, and the guide mechanism 4 can be disposed on the upper and lower sides of the housing 1.

In another embodiment of the present disclosure, the guide mechanism 4 can be disposed on the top and bottom sides of the housing 1, and also in the middle of the housing 1.

As illustrated in FIG. 1, in the above embodiment, the electronic apparatus 100 may further include a cover 5 disposed on the second shell 12. The cover 5 may include a crosswise portion 51 and two longitudinal portions 52. The crosswise portion 51 can be disposed on a side of the second shell 12 corresponding to the pull-out direction. The sliding screen 22 can slide between the front and the back of the housing 1 through the crosswise portion 51. The two longitudinal portions 52 can be connected to opposite ends of the crosswise portion 51 correspondingly. The sliding screen 22 can be confined on opposite sides of the two longitudinal portions 52. In other words, there is a space between the crosswise portion 51 and the second shell 12, through which the sliding screen 22 can slide to the back of the housing 1. The cover 5 is set to not only confine and protect the sliding screen 22, but also to assist the sliding screen 22 to complete the sliding action better.

In the above embodiment, the second shell 12 can include a rotating shaft 121, and the sliding screen 22 may be rotated around the rotating shaft 121. The sliding screen 22 can be rotated from the back of the housing 1 to the front of the housing 1 by the assistance of the rotating shaft 121, so that the sliding screen 22 is supported by the rotating shaft 121 at the curve to avoid the problem of arching of the sliding screen 22 after curving, and to avoid wrinkling on the sliding screen 22 at the curve.

In another embodiment of the present disclosure, the rotating shaft 121 can be rotated on the second shell 12, so that when the sliding screen 22 slides the rotating shaft 121 rotates at the same time, and the friction between the rotating shaft 121 and the sliding screen 22 will be rolling friction instead of sliding friction, which is conducive to improving smoothness of the form change of the sliding screen 22.

In the above embodiment, the rotating shaft 121 is set adjacent to the cover 5, and the sliding screen 22 slides through the space between the cover 5 and the rotating shaft 121, and the two cooperate to facilitate the pressing of the folded screen 2 and to enhance the flatness of the screen 2.

The structure and working process of the electronic apparatus 100 of embodiments of the present disclosure is described below with reference to FIGS. 1 - 4.

The electronic apparatus 100 of the embodiment of the present disclosure may be a cell phone which can include: a housing 1, a screen 2, a magnetic assembly 3 and a guide mechanism 4. The housing 1 can include a first shell 11 and a second shell 12, the second shell 12 can be slidably connected to the first shell 11, and the second shell 12 can be pulled or retracted along the left and right directions as illustrated.

The screen 2 can include a fixed screen 21 and a sliding screen 22. The fixed screen 21 can be disposed on the front side of the first shell 11 by adhesive fixation, and the sliding screen 22 can be connected to the left side of the fixed screen 21. During the expansion and retraction of the second shell 12, the sliding screen 22 may slide between the back of the housing 1 and the front of the housing 1 by using the rotating shaft 121.

The magnetic assembly 3 may include magnets 311 and magnetic sheet 321. The magnets 311 can be spaced apart and located on the second shell 12. The magnetic sheet 321 can be a sheet and located on the back of the sliding screen 22. And the same thickness of the support sheet 6 can be provided on the back of the fixed screen 21, the support sheet 6 and the magnetic sheet 321 can be a one-piece molding sheet, both of which can be steel sheet.

The guide mechanism 4 can be disposed between the first shell 11 and the second shell 12. The guide structure 4 may include: a number of guide strips 41, a number of guide slots 42 and a connecting strip 411. The guide strips 41 can be a number of parallel strips. The magnets 311 can be set on the guide strips 41. The number of guide strips 41 can be connected together by the connecting strip 411. The guide strips 41 and the connecting strip 411 can be set on the second shell 12, the guide slots 42 can be a number of slots and in correspondence with the guide strips 41. The guide strips 41 can fit inside the guide slots 42, and the guide slots 42 can be set on the first shell 11. The second shell 12 of the phone is also surrounded by a crosswise portion 51 and two longitudinal portions 52 that press the sliding screen 22 onto the housing 1.

When the cell phone is using the fixed screen 21 alone, the sliding screen 22 can be wound to the back of the housing 1 through the crosswise portion 51, making the cell phone smaller in size. When a large screen is needed, the second shell 12 can be pulled out and the sliding screen 22 then slides around the rotating shaft 121 to the front of the housing 1. The guide mechanism 4 can ensure that the sliding path of the second shell 12 does not change, and the magnets 311 and the steel sheet on the back of the sliding screen 22 can work together to make the screen 2 flat when it moves, and both the fixed screen 21 and the sliding screen 22 of the screen 2 can be attached to the housing 1, and the screen 2 does not arch, which can improve the display effect of the screen 2.

Other components of the electronic apparatus 100 according to the embodiments of the present disclosure, such as the screen and magnets, and the operation are known to those of ordinary skill in the art and will not be described in detail here.

In the description of this specification, referred terms such as "certain embodiments", "an embodiment", "some embodiments", "exemplary embodiments", "examples", "specific examples", or "some examples" means that a specific feature, structure, material, or characteristic described in combination with the embodiment or example is included in at least one embodiment or example of the present disclosure. In this specification, the schematic representation of the above-mentioned terms does not necessarily refer to the same embodiment or example. Moreover, the described specific features, structures, materials or characteristics can be combined in an appropriate manner in any one or more embodiments or examples.

In the description of this specification, referred terms such as "certain embodiments", "an embodiment", "some embodiments", "exemplary embodiments", "examples", "specific examples", or "some examples" means that a specific feature, structure, material, or characteristic described in combination with the embodiment or example is included in at least one embodiment or example of the present disclosure. In this specification, the schematic representation of the above-mentioned terms does not necessarily refer to the same embodiment or example. Moreover, the described specific features, structures, materials or characteristics can be combined in an appropriate manner in any one or more embodiments or examples.

Although the embodiments of the present disclosure have been shown and described above, it can be understood that the above-mentioned embodiments are exemplary and should not be construed as limiting the present disclosure. Those of ordinary skill in the art can change, modify, replace, and deform the embodiments within the scope of the present disclosure, and the scope of this disclosure is defined by the claims and their equivalents.

## Claims

1. An electronic apparatus, comprising:
a housing (1), comprising a first shell (11) and a second shell (12) pullably coupled to the first shell (11);
a screen (2), comprising a fixed screen (21) and a sliding screen (22), wherein the fixed screen (21) is fixedly arranged on a front of the first shell (11), the sliding screen (22) couples to one side of the fixed screen (21); in response to the second shell (12) being pulled out relative to the first shell (11), the sliding screen (22) being moved from a back of the housing (1) to a front of the housing (1); in response to the second shell (12) being retracted relative to the first shell (11), the sliding screen (22) being moved from the front of the housing (1) to the back of the housing (1); and
a magnetic assembly (3), the magnetic assembly (3) comprising one or more first magnetic members (31) and one or more second magnetic members (32); wherein the first magnetic member (31) is disposed on the second shell (12), the second magnetic member (32) is disposed on the sliding screen (22) so that the sliding screen (22) is attracted on the second shell (12).

2. The electronic apparatus according to claim 1, wherein the second shell (12) comprises a rotating shaft (121), and the sliding screen (22) is rotated around the rotating shaft (121).

3. The electronic apparatus according to claim 1, further comprising a drive mechanism, the drive mechanism comprising a drive gear and a drive rack engaged with the drive gear, the drive rack is disposed on the second shell (12), the drive rack is disposed on the sliding screen (22), the drive gear is capable of rotating to drive the sliding screen (22) to slide.

4. The electronic apparatus according to claim 1, wherein the sliding screen (22) is seamlessly connected to the fixed screen (21) to form the screen (2).

5. The electronic apparatus according to claim 1, wherein the first magnetic member (31) or a second magnetic member (32) is made of a metal or a magnetic non-metallic material.

6. The electronic apparatus according to claim 1, wherein at least one of the first magnetic member (31) and the second magnetic member (32) comprises one or more magnets (311).

7. The electronic apparatus according to claim 6, wherein the number of magnets (311) is two or more, and the magnets (311) are spaced apart from each other.

8. The electronic apparatus according to claim 1, wherein the magnetic assembly (3) comprises at least one of a magnetic sheet (321) and a magnetic wire.

9. The electronic apparatus according to claim 8, wherein if at least one of the first magnetic members (31) and the second magnetic members (32) comprises the magnetic sheet (321), the magnetic sheet (321) is in the form of a strip; or
if at least one of the first magnetic members (31) and the second magnetic members (32) comprises the magnetic wire, the magnetic wires are connected to form a mesh.

10. The electronic apparatus according to claim 1, wherein the number of the first magnetic members (31) is two or more, and the first magnetic members (31) are evenly disposed on the second shell (12).

11. The electronic apparatus according to claim 1, wherein the first magnetic members (31) and the second magnetic members (32) are spaced apart from each other.

12. The electronic apparatus according to claim 1, wherein a magnetic sheet (321) is disposed on the back of the sliding screen (22), and a support sheet (6) is disposed on the back of the fixed screen (21) connected to the magnetic sheet (321).

13. The electronic apparatus according to claim 12, wherein the support sheet (6) is integrally formed with the magnetic sheet (321).

14. The electronic apparatus according to any one of claims 1 to 13, further comprising a guide mechanism (4) disposed between the first shell (11) and the second shell (12), wherein the guide mechanism (4) is configured to confine the pulling or retracting direction of the second shell (12) to relative to the first shell (11).

15. The electronic apparatus according to claim 14, wherein the guide mechanism (4) comprises one or more guide slots (42) and one or more guide strips (41), the guide slots (42) are disposed on the first shell (11), the guide strip (42) are disposed on the second shell (12), the guide strips (41) fit in the guide slots (42), the guide slots (42) are configured to confine the guide strips (41) to slide along the direction of movement of the second shell (12).

16. The electronic apparatus according to claim 15, wherein the shape of the guide strips (41) are elongated strips set along the direction of movement of the second shell (12), and the guide slots (42) are elongated slots.

17. The electronic apparatus according to claim 15, wherein the guide strips (41) are a plurality of parallel strips, and the guide strips (41) are connected together by a connecting strip (411), the guide slots (42) are a plurality of slots and in correspondence with the guide strips (41).

18. The electronic apparatus according to claim 15, wherein the first magnetic members (31) are disposed on the guide strips (41).

19. The electronic apparatus according to any one of claims 1 to 18, further comprising a cover (5) disposed on the second shell (12), wherein the cover (5) comprises:
a crosswise portion (51), wherein the crosswise portion (51) is disposed on a side of the second shell (12) corresponding to the pull-out direction, the sliding screen (22) slides between the front and the back of the housing (1) through the crosswise portion (51);
two longitudinal portions (52), wherein the two longitudinal portions (52) are connected to opposite ends of the crosswise portion (51) correspondingly, the sliding screen (22) is confined on opposite sides of the two longitudinal portions (52).

20. The electronic apparatus according to any one of claims 1 to 19, the fixed screen (21) and the sliding screen (22) are integrated.
